# EUROPÄISCHE PATENTSCHRIFT

(11) **EP 0 901 299 B1**
(45) Veröffentlichungstag und Bekanntmachung des Hinweises auf die Patenterteilung: **25.01.2006**
(21) Anmeldenummer: 98115515.3
(22) Anmeldetag: 18.08.1998
(51) Int. Cl.: H04Q 7/38, H04M 1/72

(54) **Digitale Telekommunikationseinrichtung**
Digital telecommunications device
Dispositif de télécommunication numérique

(30) Priorität: 08.09.1997 DE 19739228
(43) Veröffentlichungstag der Anmeldung: 10.03.1999
(73) Patentinhaber: Infineon Technologies AG, 81669 München (DE)
(72) Erfinder: Heinen, Stefan, Dr., 47802 Krefeld (DE); Kranz, Christian, Dr., 40885 Ratingen Lintorf (DE)
(74) Vertreter: Jannig, Peter

(56) Entgegenhaltungen:
- WO-A-97/09835
- US-A- 5 044 010
- US-A- 5 418 839
- US-A- 5 594 944

## Beschreibung

Die vorliegende Erfindung betrifft eine Vorrichtung gemäß dem Oberbegriff des Patentanspruchs 1, d.h. eine digitale Telekommunikationseinrichtung mit einem oder mehreren schnurlosen Mobilteilen, wobei die Mobilteile und die Basisstation, mit der diese in Verbindung stehen oder treten können, in der Lage sind, die Sende-/Empfangsfrequenz wiederholt zu wechseln.

Eine derartige Telekommunikationseinrichtung ist beispielsweise ein nach dem DECT-Standard arbeitendes Funksystem.

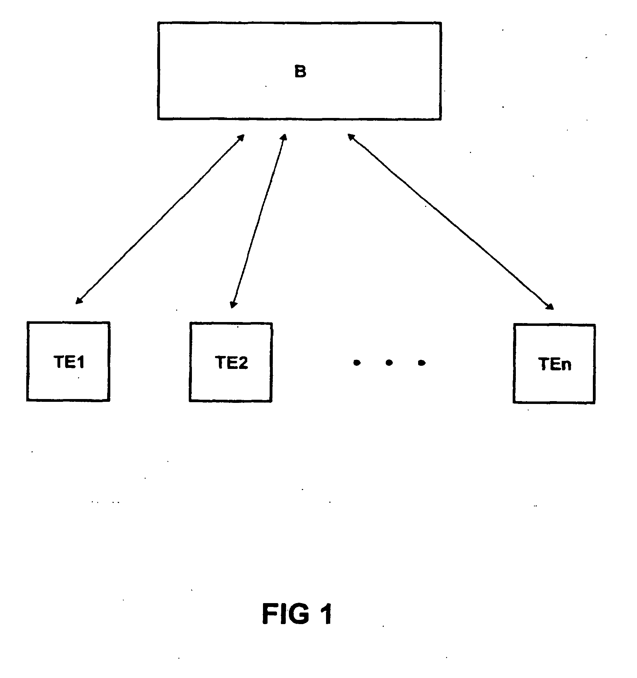

Der prinzipielle Aufbau eines solchen Funksystems ist in Figur 1 veranschaulicht.

Das in der Figur 1 gezeigte System besteht aus einer Basisstation B und mehreren schnurlosen Telekommunikationsendeinrichtungen TE1 bis TEn. Die schnurlosen Telekommunikationsendeinrichtungen TE1 bis TEn sind im betrachteten Beispiel Mobiltelefone, welche in der Lage sind, über Funk mit der Basisstation B zu kommunizieren.

Anstelle der schnurlosen Telekommunikationsendeinrichtungen TE1 bis TEn oder zusätzlich zu diesen können auch schnurlose Anschlußdosen zum Anschluß schnurgebundener Telekommunikationsendeinrichtungen zum Einsatz kommen. Die schnurlosen Telekommunikationsendeinrichtungen, die schnurlosen Anschlußdosen und vergleichbare Einrichtungen sind die eingangs bereits erwähnten Mobilteile.

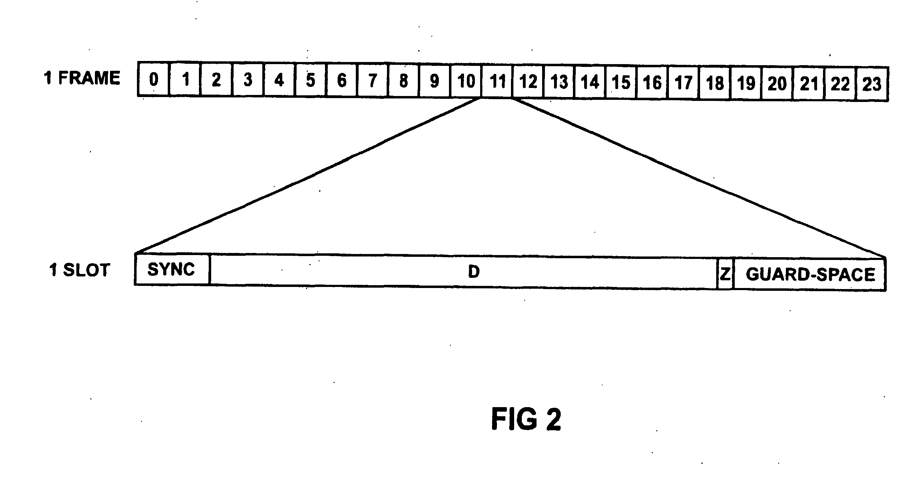

Die Datenübertragung zwischen der Basisstation B und den Mobilteilen erfolgt in Einheiten von sogenannten Frames, genauer gesagt TDMA-Frames, wobei TDMA für Time Division Multiple Access steht und besagt, daß die Frames so aufgebaut sind, daß die Basisstation in aufeinanderfolgenden Zeitschlitzen (sogenannten time slots bzw. slots) eines jeweiligen Frame der Reihe nach mit allen bei ihr eingebuchten Mobilteilen kommunizieren kann, und dies dann jeweils unter Ausnutzung der vollen Bandbreite des Übertragungskanals. Das TDMA-Verfahren ist hinlänglich bekannt und bedarf keiner weiteren Erläuterung. Der prinzipielle Aufbau eines zur Durchführung des TDMA-Verfahrens geeigneten (TDMA-)Frames wird nachfolgend anhand der Figur 2 erläutert.

Wie aus der Figur 2 ersichtlich ist, setzt sich ein solcher Frame, genauer gesagt der hier betrachtete DECT-Full-Slot-Frame aus 24 identisch langen Zeitschlitzen bzw. Slots (Full-Slots) zusammen. Die ersten 12 der 24 Slots werden von der Basisstation zu den Mobilteilen übertragen, und die sich daran anschließenden zweiten 12 Slots werden von den Mobilteilen zur Basisstation übertragen. Genauer gesagt werden der nullte Slot eines jedem Frame von der Basisstation zu einem nullten Mobilteil, der erste Slöt von der Basisstation zu einem ersten Mobilteil, der zweite Slot von der Basisstation zu einem zweiten Mobilteil, ..., der elfte Slot von der Basisstation zu einem elften Mobilteil, und umgekehrt der zwölfte Slot vom nullten Mobilteil zur Basisstation, der dreizehnte Slot vom ersten Mobilteil zur Basisstation, der vierzehnte Slot vom zweiten Mobilteil zur Basisstation, ... und der dreiundzwanzigste Slot vom elften Mobilteil zur Basisstation übertragen.

Ein Frame bzw. die 24 Slots eines Frames werden innerhalb von 10 ms übertragen. Jeder Slot umfaßt 480 Bits wird in rund 417 µs (in 416,66 µs) übertragen. Wie in der Figur 3 angedeutet ist, verteilen sich die 480 Bits auf ein 32 Bits breites Sync-Feld, ein 388 Bits breites D-Feld, ein 4 Bits breites Z-Feld, und ein 56 Bits breites Guard-Space-Feld.

Für die Übertragung der eigentlich interessierenden Nutzdaten (beispielsweise Sprachdaten) sind 320 Bits innerhalb des D-Feldes reserviert. Die Basisstation kann also innerhalb von 10 ms 320 Bits umfassende Nutzdaten zu jedem der Mobilteile versenden und die gleiche Menge an Nutzdaten von jedem der Mobilteile empfangen; die Übertragungsrate für Nutzdaten zwischen der Basisstation und jedem der Mobilteile beträgt also 32 kBit/s in jede Richtung.

Wie bei jeder Datenübertragung können auch hier Fehler auftreten. Dies ist insbesondere dann der Fall, wenn die Sende-/Empfangsfrequenz von Störungen überlagert wird.

Unter anderem deshalb stehen bei nach dem DECT-Standard arbeitenden Funksystemen insgesamt 10 verschiedene Frequenzen als Sende-/Empfangsfrequenzen zur Verfügung. Die Auswahl der jeweils als Sende-/Empfangsfrequenz zu verwendenden Frequenz erfolgt durch die jeweiligen Mobilteile unter Berücksichtigung der örtlichen Sende- und Empfangsverhältnisse.

Die Patentanmeldung US-A- 5 418 839 offenbart eine solche Telekommunikationseinrichtung, wobei die interferenzfreien Frequenzen in eine Liste aufgenommen sind. Diese Frequenzen werden je nach höchater Wahrscheinlichkeit der interferenzfreien Benutzung in der Liste sortiert.

Obgleich dadurch jedes Mobilteil unabhängig von den anderen Mobilteilen über eine selbst gewählte Frequenz mit der Basisstation kommunizieren kann, sind Störungen der jeweiligen Sende-/Empfangsfrequenz dennoch nicht vollkommen ausgeschlossen. Dies ist insbesondere dann der Fall, wenn es sich um wiederholt auftretende kurzzeitige Störungen handelt.

Der vorliegenden Erfindung liegt daher die Aufgabe zugrunde, die Telekommunikationseinrichtung gemäß dem Oberbegriff des Patentanspruchs 1 derart weiterzubilden, daß auf Störungen der Sende-/Empfangsfrequenz beruhende Übertragungsfehler auf einfache Weise auf ein Minimum reduzierbar sind.

Diese Aufgabe wird erfindungsgemäß durch die im kennzeichnenden Teil des Patentanspruchs 1 beanspruchten Merkmale gelöst.

Demnach ist vorgesehen, daß die Mobilteile und/oder die Basisstation dazu ausgelegt sind, gestörte Sende-/Empfangsfrequenzen eine vorbestimmte Zeit nach der Erkennung der Störung von der Verwendung auszuschließen.

Dadurch kann auch die Verwendung solcher Frequenzen als Sende-/Empfangsfrequenz verhindert werden, die nur ab und zu kurzzeitig gestört sind; Übertragungsfehler, die auf Störungen der Sende-/Empfangsfrequenz beruhen, sind somit auf sehr einfache Weise reduzierbar.

Darüber hinaus kann dadurch auch die Auswahl der jeweiligen Sende-/Empfangsfrequenz erleichtert werden, denn da die gestörten oder vermutlich gestörten Frequenzen von der Verwendung als Sende-/Empfangsfrequenz ausgeschlossen sind, kann es zumindest dann, wenn die ungestörten Frequenzen in kurzen Zeitabständen zyklisch als Sende-/Empfangsfrequenz verwendet werden, riskiert werden, eine beliebige der nicht gesperrten Frequenzen ohne vorherige Überprüfung als Sende-/Empfangsfrequenz zu verwenden.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert.
Es zeigen
- Figur 1: den Aufbau eines nach dem DECT-Standärd arbeitenden Funksystems, und
- Figur 2: das Format der Daten, die zwischen einer Basisstation und mit dieser kommunizierenden Telekommunikationsendeinrichtungen eines nach dem DECT-Standard arbeitenden Funksystems ausgetauscht werden.

Die im folgenden näher beschriebene Telekommunikationseinrichtung ist wie ein nach dem DECT-Standard arbeitendes System eine digitale Telekommunikationseinrichtung mit einem oder mehreren schnurlosen Mobilteilen; sie ist allerdings zur Verwendung im sogenannten 2,4 GHz ISM-Band ausgelegt, welches sich von 2400 bis 2483,5 MHz erstreckt und von der FCC (Federal Communication Commision der U.S.A.) unter bestimmten Auflagen für den Betrieb derartiger Telekommunikationseinrichtungen freigegeben wurde.

Es sei bereits an dieser Stelle darauf hingewiesen, daß die erfindungsgemäße Telekommunikationseinrichtung nicht nur zur Verwendung im 2,4 GHz ISM-Band geeignet ist, sondern prinzipiell auch in beliebigen anderen Frequenzbändern zum Einsatz kommen kann.

Die Kommunikation zwischen den Mobilteilen und der Basisstation möge wie bei dem eingangs beschriebenen System über eine Vielzahl von Zeitschlitzen bzw. Slots umfassende TDMA-Frames erfolgen; die TDMA-Frames mögen auch wiederum eine Länge von jeweils 10 ms aufweisen. Der Aufbau und die Länge der Frames sind hierauf jedoch nicht beschränkt; die sind auch beliebig anders festlegbar.

Die Übertragungsrate, mit welcher die einzelnen Bits der zu übertragenden Information übertragen werden, ist im betrachteten Beispiel gegenüber der Bitübertragungsrate der eingangs beschriebenen Telekommunikationseinrichtung halbiert, wodurch sich die pro Zeiteinheit übertragbare bzw. austauschbare Datenmenge entsprechend reduziert. Die Erfindung ist jedoch nicht nur bei Telekommunikationseinrichtungen mit dieser Bitübertragungsrate anwendbar, sondern kann grundsätzlich auch bei beliebigen anderen Bitübertragungsraten zum Einsatz kommen.

Die Sende-/Empfangsfrequenzen, unter Verwendung welcher die zu übertragenden Informationen übertragen werden, werden nur ein einziges Mal pro Frame gewechselt. Die gewählte Sende-/Empfangsfrequenz wird für die Kommunikation zwischen der Basisstation und allen angeschlossenen Mobilteilen verwendet; es kann nicht mehr jedes Mobilteil individuell festlegen, über welche Frequenz die Kommunikation mit der Basisstation erfolgen soll.

Es stehen mindestens 75, im betrachteten Beispiel sogar 90 Frequenzen zur Verfügung, die im Mittel gleich häufig als Sende-/Empfangsfrequenz verwendet werden.

Welche dieser Frequenzen jeweils als nächste Sende-/Empfangsfrequenz verwendet wird, genauer gesagt die Reihenfolge, in welcher die verfügbaren Frequenzen als Sende-/Empfangsfrequenz verwendet werden sollen, ist in einer Pseudo-Zufalls-Frequenzliste festgelegt, die sowohl in der Basisstation als auch in den Mobilteilen verfügbar ist.

Die Pseudo-Zufalls-Frequenzliste wird von der Basisstation und den Mobilteilen synchron sequentiell durchlaufen. D.h., bei den (in der Basisstation und den Mobilteilen gleichzeitig erfolgenden) Frequenzwechseln wird jeweils diejenige Frequenz als neue Sende-/Empfangsfrequenz verwendet, die durch den nächsten Eintrag in der Pseudo-Zufalls-Frequenzliste repräsentiert wird. Die Frequenzwechsel werden nicht durch verschlechterte Sende-/Empfangsverhältnisse ausgelöst, sondern erfolgen unabhängig davon frameweise zu vorgegebenen Zeitpunkten.

Sollte die angesprungene Frequenz gestört sein, so ändert sich dadurch am Betriebsablauf zumindest zunächst noch nichts; die Mobilteile und die Basisstation treffen sich infolge des synchronen Durchlaufens inhaltlich identischer Pseudo-Zufalls-Frequenzlisten nach einer gewissen Zeit (im nächsten oder einem späteren Frame) automatisch bei der (gemäß der Frequenzliste) nächsten ungestörten Frequenz wieder.

Die Basisstation und die Mobilteile sind im betrachteten Beispiel so ausgebildet, daß sie erkennen können, wenn die empfangenen Daten aufgrund der Verwendung einer gestörten Sende-/Empfangsfrequenz fehlerhaft übertragen wurden oder sein können. In diesem Fall werden von der Basisstation bzw. den betreffenden Mobilteilen die zuletzt fehlerfrei erhaltenen Nutzdaten (beispielsweise Sprachdaten) ausgegeben. Auf diese Weise sind selbst Störungen, die sich über drei aufeinanderfolgende Frames erstrecken, ohne wahrnehmbare Ausfälle überbrückbar.

Länger andauernde Störungen können vermieden werden, wenn die Pseudo-Zufalls-Frequenzliste so angelegt ist, daß zwischen aufeinanderfolgend als Sende-/Empfangsfrequenz zu verwendenden Frequenzen ein größer Frequenzabstand besteht. Dadurch wird die Gefahr reduziert, daß typische breitbandige Störer wie beispielsweise Mikrowellenöfen eine länger (mehrere aufeinanderfolgende Frames) andauernde Störung verursachen.

Zusätzlich oder alternativ werden diejenigen Frequenzen, bei denen eine fehlerfreie Kommunikation nicht möglich ist, in der Folgezeit gesondert behandelt. Ob eine fehlerfreie Kommunikation möglich ist oder nicht, kann entweder in der Basisstation oder in den Mobilteilen oder in beiden kontrolliert werden. Die Erkennung kann beispielsweise (aber nicht ausschließlich) durch eine CRC Checksummen-Überprüfung erfolgen. Die gestörten Frequenzen werden in einer Liste gesammelt. Diese Liste wird im betrachteten Beispiel in der Basisstation geführt. Obgleich die Liste zusätzlich oder alternativ auch in den Mobilteilen geführt werden kann, ist es aus Kostengründen vorzuziehen, daß die Liste nur in der Basisstation geführt wird. Die Basisstation kann nämlich gleichzeitig mit mehreren Mobilteilen verbunden sein, und es sollen im betrachteten Beispiel ja sämtliche Mobilteile jeweils über die selbe Frequenz mit der Basisstation kommunizieren. Wird in der Basisstation oder in einem der Mobilteile eine Störung der Sende-/Empfangsfrequenz registriert, so wird von der betreffenden Einrichtung bei der nächsten fehlerfreien Verbindung eine entsprechende Meldung an die die Liste der gestörten Frequenzen führende(n) Stelle(n) übermittelt.

Umgekehrt werden von der die besagte Liste führenden Stelle, im betrachteten Beispiel also von der Basisstation in regelmäßigen Abständen (beispielsweise in jedem Informationsfeld des Sendeburst) an die jeweils anderen Funkteile Informationen übermittelt, die die nächsten als Sende-/Empfangsfrequenz verwendbaren oder nicht verwendbaren Frequenzen repräsentieren bzw. aus denen sich die nächsten als Sende-/Empfangsfrequenz verwendbaren oder nicht verwendbaren Frequenzen ermitteln lassen. Dadurch kennen sowohl die Basisstation als auch die Mobilteile jeweils die nächsten (beispielsweise K) als Sende-/Empfangsfrequenz zu verwendenden Frequenzen. Unter den verwendbaren bzw. zu verwendenden Frequenzen sind die zuvor als gestört eingestuften Frequenzen nicht enthalten. Es können also nur solche Frequenzen als Sende-/Empfangsfrequenzen verwendet werden, welche unter den gegebenen Umständen keine Störungen erwarten lassen; die Basisstation und die Mobilteile überspringen die als gestört eingestuften Frequenzen in der Pseudo-Zufalls-Frequenzliste.

Ist eine bislang fehlerfrei eingestufte Frequenz aufgrund veränderter Umstände plötzlich gestört, so geht die Verbindung zwischen der Basisstation und einem oder mehreren der Mobilteile nur kurzzeitig verloren, denn sowohl die Basisstation als auch die Mobilteile kennen ja noch die K-1 nächsten Frequenzen, die im Anschluß daran als Sende-/Empfangsfrequenz zu verwenden sind, so daß die Basisstation und die Mobilteile über kurz oder lang automatisch wieder ungestört miteinander in Kontakt kommen.

Die als gestört eingestuften Frequenzen bleiben nur eine vorbestimmte Zeit als gestört eingestuft. Nach Ablauf dieser Zeit werden sie aus der Liste der als gestört eingestuften Frequenzen gestrichen und wieder als ungestört angenommen.

Die Anzahl der in der Liste als gestört eingestuften Frequenzen ist grundsätzlich nicht begrenzt. Es erweist sich in bestimmten Fällen jedoch als vorteilhaft, wenn zwangsweise eine bestimmte Mindestanzahl von als ungestört eingestuften Frequenzen aufrechterhalten wird, wobei diese Mindestanzahl für das 2,4 Ghz ISM-Band auf 75 festgelegt ist; dadurch kann im zeitlichen Mittel ein breites Ausgangsspektrum erzeugt werden. In die Liste können auch in regelmäßigen oder unregelmäßigen Abständen durch einen Zufallsgenerator bestimmte ungestörte Frequenzen aufgenommen werden. Dadurch kann ein Gleichlauf von voneinander unabhängigen Basisstationen vermieden werden.

Die Mobilteile sind dazu ausgelegt, zum Verbindungsaufbau mit der Basisstation eine bestimmte Sende-/Empfangsfrequenz auszuwählen, über die sie die Verbindung zur Basisstation aufnehmen möchten. Die Auswahl dieser Frequenz erfolgt bei komfortablen Mobilteilen unter Verwendung einer Feldstärkemessung (RSSI(Radio Signal Strength Indication)-Messung); es wird eine Frequenz ausgewählt, die vom betreffenden Mobilteil mit hoher Feldstärke störungsfrei empfangen wird. Dadurch kann mit hoher Wahrscheinlichkeit erreicht werden, daß die erste Kontaktaufnahme zwischen dem betreffenden Mobilteil und der Basisstation störungsfrei vonstatten gehen kann. Bei einfacher aufgebauten Mobilteilen kann die Frequenz, über die die Kontaktaufnahme erfolgen soll, auch nach dem Zufallsprinzip ausgewählt werden.

Bei der wie auch immer ausgewählten Frequenz wartet das Mobilteil, bis ein sogenannter Sync-Bearer von der Basisstation empfangen wird. Der Sync-Bearer ist ein vorbestimmtes (Synchronisations-)Datenwort, das von der Basisstation in zur Datenübertragung ausgelegten Slots versandt wird, wenn und so lange die betreffenden Slots nicht dafür reserviert sind, mit in der Basisstation eingebuchten Mobilteilen zu kommunizieren. Ist nach einer vorbestimmten Zeit kein Sync-Bearer empfangen worden, wechselt das Mobilteil die Empfangsfrequenz und startet die Suche erneut.

Der Sync-Bearer kann innerhalb der betreffenden Slots mehrfach übertragen werden. Dadurch kann mit sehr großer Wahrscheinlichkeit verhindert werden, daß der erwartete Sync-Bearer nur deshalb nicht empfangen wird, weil das betreffende Mobilteil kurzzeitig nicht auf Empfang geschaltet ist.

Wenn das Mobilteil den Sync-Bearer empfangen hat (dies ist im Mittel nach spätestens ca. 0,5 s der Fall), kann es der Basisstation frequenzmäßig folgen. Zusammen mit dem Sync-Bearer werden nämlich zugleich Informationen übertragen, aus welchen das betreffende Mobilteil die nächsten K als Sende-/Empfangsfrequenz zu verwendenden Frequenzen ermitteln kann.

Bei einer Frame-Dauer von 10 ms werden die 90 verschiedenen Sende-/Empfangsfrequenzen in weniger als einer Sekunde durchsprungen. Die Folge hiervon ist, daß durch die beschriebene Telekommunikationseinrichtung in dem verwendeten bzw. zur Verfügung stehenden Frequenzband im zeitlichen Mittel ein breitbandiges Ausgangsspektrum erzeugt wird. Störungen, die darauf beruhen, daß dauerhaft ein und die selbe Frequenz oder wenige verschiedene Frequenzen benutzt werden, sind dadurch zuverlässig ausschließbar.

Bedingt durch die Tatsache, daß die Sende-/Empfangsfrequenz anders als bei dem eingangs beschriebenen System nicht mehr slotweise, sondern nur noch frameweise gewechselt wird und werden muß, können weniger oder kürzere Slots zur Umstellung und/oder Nachregelung der Sende-/Empfangsfrequenz vorgesehen werden. Dadurch ist der Zeitanteil, der pro Zeiteinheit (pro Frame) zum Nutzdatenaustausch zur Verfügung steht, relativ und absolut gesehen größer. Dies kann dazu genutzt werden, um die auszutauschenden Informationen in höherer Qualität zu übertragen oder (bei gleichbleibender Qualität) mehr Mobilteile an der Basisstation betreiben zu können.

Die beschriebene Telekommunikationseinrichtung erweist sich mithin nicht nur in der Störsicherheit, sondern auch anderweitig als sehr vorteilhaft

## Patentansprüche

1. Digitale Telekommunikationseinrichtung mit einem oder mehreren schnurlosen Mobilteilen, wobei die Mobilteile und die Basisstation, mit der diese in Verbindung stehen oder treten können, in der Lage sind, die Sende-/Empfangefrequenz wiederholt zu wechseln, und wobei die Mobilteile und/oder die Basisstation dazu ausgelegt sind, gestörte Sende-/Empfangsfrequenzen eine vorbestimmte Zeit nach der Erkennung der Störung von der Verwendung auszuschließen,
**dadurch gekennzeichnet,**
**daß** die Basisstation dazu ausgelegt ist, eine Liste der gestörten Sende/Empfangsfrequenzen zu führen, und daß die Basisstation dazu ausgelegt ist, in die Liste der gestörten Sende-/Empfangsfrequenzen vereinzelt auch solche Sende/Empfangsfrequenzen aufzunehmen, die nicht gestört sind.

2. Telekommunikationseinrichtung nach Anspruch 1,
**dadurch gekennzeichnet,**
**daß** die Mobilteile und/oder die Basisstation dazu ausgelegt sind, Sende-/Empfangsfrequenz-Störungen anhand von CRC Checksummen-Überprüfungen zu erkennen.

3. Telekommunikationseinrichtung nach einem der vorhergehenden Ansprüche,
**dadurch gekennzeichnet,**
**daß** die Mobilteile dazu ausgelegt sind, der Basisstation als gestört einzustufende Sende-/Empfangsfrequenzen mitzuteilen.

4. Telekommunikationseinrichtung nach einem der vorhergehenden Ansprüche,
**dadurch gekennzeichnet,**
**daß** die Basisstation dazu ausgelegt ist, den Mobilteilen mitzuteilen, welches die als nächste zu verwendenden Sende/Empfangsfrequenzen sind oder welche Frequenzen nicht als Sende-/Empfangsfrequenzen verwendet werden dürfen.

5. Telekommunikationseinrichtung nach einem der vorhergehenden Ansprüche,
**dadurch gekenazeichnet,**
daß in der Basisstation und den Mobilteilen Frequenzlisten verfügbar sind, in welchen festgelegt ist, in welcher Reihenfolge die zur Verfügung stehenden Frequenzen im Normalfall als Sende-/Empfangsfrequenz verwendet werden sollen.

## Revendications

1. Dispositif de télécommunication numérique avec une ou plusieurs pièces mobiles sans fil, les pièces mobiles et la station de base à laquelle celles-ci sont reliées ou peuvent entrer en liaison, étant capables de modifier de manière répétée la fréquence d'émission/de réception et les pièces mobiles et/ou la station de base étant configurées pour exclure de l'utilisation des fréquences d'émission/de réception perturbées pendant une durée prédéterminée après la reconnaissance de la perturbation,
**caractérisé en ce**
**que** la station de base est configurée pour mener une liste des fréquences d'émission/de réception perturbées et en ce que la station de base est configurée pour recevoir, dans la liste des fréquences d'émission/de réception perturbées, individuellement même les fréquences d'émission/de réception qui ne sont pas perturbées.

2. Dispositif de télécommunication selon la revendication 1,
**caractérisé en ce**
**que** les pièces mobiles et/ou la station de base sont configurées pour reconnaître des perturbations de fréquence d'émission/de réception à l'aide de vérifications de sommes de contrôle CRC (contrôle par redondance cyclique).

3. Dispositif de télécommunication selon l'une quelconque des revendications précédentes,
**caractérisé en ce**
**que** les pièces mobiles sont configurées pour communiquer à la station de base des fréquences d'émission/de réception à classifier comme perturbées.

4. Dispositif de télécommunication selon l'une quelconque des revendications précédentes,
**caractérisé en ce**
**que** la station de base est configurée pour communiquer aux pièces mobiles quelles fréquences sont les prochaines fréquences d'émission/de réception à utiliser ou quelles fréquences ne doivent pas être utilisées comme fréquences d'émission/de réception.

5. Dispositif de télécommunication selon l'une quelconque des revendications précédentes,
**caractérisé en ce**
**que** des listes de fréquences, dans lesquelles il est déterminé dans quel ordre les fréquences disponibles doivent être utilisées en cas normal en tant que fréquence d'émission/de réception, sont disponibles dans la station de base et les pièces mobiles.

## Claims

1. Digital telecommunication device comprising one or more cordless mobile units, the mobile units and the base station to which these are or can be connected being capable of repeatedly changing the transmit/receive frequency, and the mobile units and/or the base station being designed for eliminating from use disturbed transmit/receive frequencies a predetermined time after the detection of the interference, **characterized in that** the base station is designed for carrying a list of the disturbed transmit/receive frequencies and that the base station is designed for including in the list of disturb transmit/receive frequencies occasionally also those transmit/receive frequencies which are not disturbed.

2. Telecommunication device according to Claim 1, **characterized in that** the mobile units and/or the base station are designed for detecting transmit/receive frequency interference by means of CRC checksum checks.

3. Telecommunication device according to one of the preceding claims, **characterized in that** the mobile units are designed for reporting transmit/receive frequencies to be graded as disturbed to the base station.

4. Telecommunication device according to one of the preceding claims, **characterized in that** the base station is designed for reporting to the mobile units which ones are the next transmit/receive frequencies to be used or which frequencies must not be used as the transmit/receive frequencies.

5. Telecommunication device according to one of the preceding claims, **characterized in that** frequency lists, in which it is specified in which order the available frequencies are to be used as the transmit/receive frequency in the normal case, are available in the base station and the mobile units.
